# EUROPEAN PATENT APPLICATION

(11) **EP 3 131 046 A1**
(43) Date of publication of application: **15.02.2017**
(21) Application number: 15180431.7
(22) Date of filing: 10.08.2015
(51) Int. Cl.: G06Q 30/00, G06Q 30/06

(54) **DETECTION APPARATUS AND STORAGE MEDIUM**

(71) Applicant: Toshiba TEC Kabushiki Kaisha, Tokyo 141-0032 (JP)
(72) Inventor: SERIZAWA, Yasutoshi, Shinagawa-ku, Tokyo 141-0032 (JP)
(74) Representative: Takeuchi, Maya

(57) **Abstract**

According to one embodiment, a detection apparatus includes an imaging part, a control part and an interface part. The imaging part captures a person using a first object. The control part determines, whether the person is in trouble based on an image captured by the imaging part and pattern data previously stored in a storage part. If the control part determines that the person is in trouble, the interface part notifies a specified apparatus

## Description

### FIELD

Embodiments described herein relate generally to a technique to assist an operation of an apparatus.

### BACKGROUND

There is a sales method in which a store visitor is guided in an unmanned state by using the technology of a robot or the like, and sales of articles are promoted.

In this case, there is a problem that the store visitor does not know how to use a sales commodity, and interrupts the process and leaves, and the chance of selling or information provision is lost. If a person, not a robot, guides the store visitor and explains how to use, there is a problem that the cost increases.

Besides, in a state where a user operates a cash dispenser or a terminal for commodity guidance, if the user does not know how to use the terminal apparatus, the user may interrupt and leave in the middle of the operation.

To solve such problems, there is provided a detection apparatus comprising:
an imaging part to capture a person using a first object;
a control part to determine, whether the person is in trouble based on an image captured by the imaging part and pattern data previously stored in a storage part, and
an interface part to notify a specified apparatus if the control part determines that the person is in trouble.

Preferably, the control part specifies a face of the person from the image captured by the imaging part, compares feature data of the face with feature data of faces previously stored in the storage part, and determines whether the person is in trouble.

Preferably still, the control part compares the feature data of the face of the person captured by the imaging part with feature data of a face with furrowed brows previously stored in the storage part.

Preferably yet, the control part determines whether the person performs an action of raising a hand while a palm faces upward, and determines whether the person is in trouble.

Suitably, the imaging part takes a video, and
the control part specifies a face of the person from the image captured by the imaging part, and determines whether the face moves in right and left by comparing respective frame images in the video.

Typically, the apparatus further comprising a microphone to collect a voice uttered by the person, wherein
the control part performs voice recognition of the voice collected by the microphone, and determines that the person is in trouble if a recognized pattern is coincident with a pattern previously stored in the storage part.

Suitably, the interface part notifies an apparatus in a facility outside a facility where the detection apparatus is installed through a broadband communication network.

Alternately, the interface part notifies a receiver held by a person in a facility where the detection apparatus is installed.

Alternatively still, the control part determines, based on a selection made by the person, whether a notification is made to an apparatus in a facility outside a facility where the detection apparatus is installed or a notification is made to a receiver held by a person in the facility where the detection apparatus is installed, and
the interface part notifies in accordance with the determination.

The invention also relates to a storage medium storing a program, wherein the program causes an apparatus including at least an imaging part and a network part to perform:
capturing a person using a first object;
determining, whether the person is in trouble based on an image captured by the imaging part and pattern data previously stored in a storage part, and
notifying a specified apparatus if a determination that the person is in trouble.

### DESCRIPTION OF THE DRAWINGS

The above, and other objects, features and advantages of the present invention will be made apparent from the following description of the preferred embodiments, given as nonlimiting examples, with reference to the accompanying drawings, in which:
FIG. 1 is a view showing a structural example of a detection system of an embodiment.
FIG. 2 is a block diagram showing a structural example of a detection apparatus of the embodiment.
FIG. 3 is a block diagram showing a structural example of a desktop information processing apparatus of the embodiment.
FIG. 4 is a block diagram showing a structural example of a receiver of the embodiment.
FIG. 5 is a flowchart showing an operation example of the embodiment.
FIG. 6 is a flowchart showing an example of a detection operation based on a captured image.
FIG. 7 is a flowchart showing an example of a detection operation based on a voice of the embodiment.
FIG. 8 is a flowchart showing an example of a detection operation based on the presence or absence of an input operation of the embodiment and is a flowchart showing an operation example of the detection apparatus.
FIG. 9 is a flowchart showing an example of a detection operation based on the presence or absence of an input operation of the embodiment and is a flowchart showing an operation example of the desktop information processing apparatus.
FIG. 10 is a flowchart showing an operation example after detection of the embodiment.
FIG. 11 is a view showing an example of a selection screen.
FIG. 12 is a view showing an operation example of a receiver.

### DETAILED DESCRIPTION

In general, according to one embodiment, a detection apparatus includes an imaging part, a control part and an interface part. The imaging part captures a person using a first object. The control part determines, whether the person is in trouble based on an image captured by the imaging part and pattern data previously stored in a storage part. If the control part determines that the person is in trougle, the interface part notifies a specified apparatus.

The detection system of the embodiment is used in a commercial facility, such as a store, when a commodity is exhibited so that a store visitor can operate. In the embodiment, a robot including a speaker, a microphone, a camera and an operating part is used as the detection apparatus, and monitors the action of the store visitor. When the store visitor makes a gesture indicating that he or she is in trouble because he or she does not know how to handle or operate the commodity, the detection system of the embodiment detects this, and notifies a staff in the facility or notifies a call center outside the facilitate. This prevents a case where the store visitor does not know how to use the terminal and interrupts the process. Besides, an assistant or a staff is not required to be always placed near the exhibited commodity.

Besides, the detection apparatus of the embodiment may be installed near a terminal apparatus operated by a user, such as a cash dispenser or a terminal apparatus for commodity guidance, and the action of the terminal user may be monitored. In this case, when the user makes a gesture indicating trouble because he or she does not know how to handle or operate the terminal apparatus, the detection apparatus detects this, and notifies a clerk in a facility or notifies a call center outside the facilitate. This prevents a case where the user does not know how to operate the terminal apparatus, and interrupts and leaves.

Hereinafter, a description will be made on an example in which a desktop information processing apparatus is an exhibited commodity, and a store visitor does not know how to operate the desktop information processing apparatus. However, the exemplary embodiments described herein are not limited to this. An embodiment may be applied to such a case that with respect to a terminal apparatus operated by a user, such as a cash dispenser or a terminal apparatus for commodity guidance, the user does not know how to operate this terminal apparatus. In this case, in the following description, the desktop information processing apparatus is replaced by the cash dispenser or the terminal apparatus for commodity guidance.

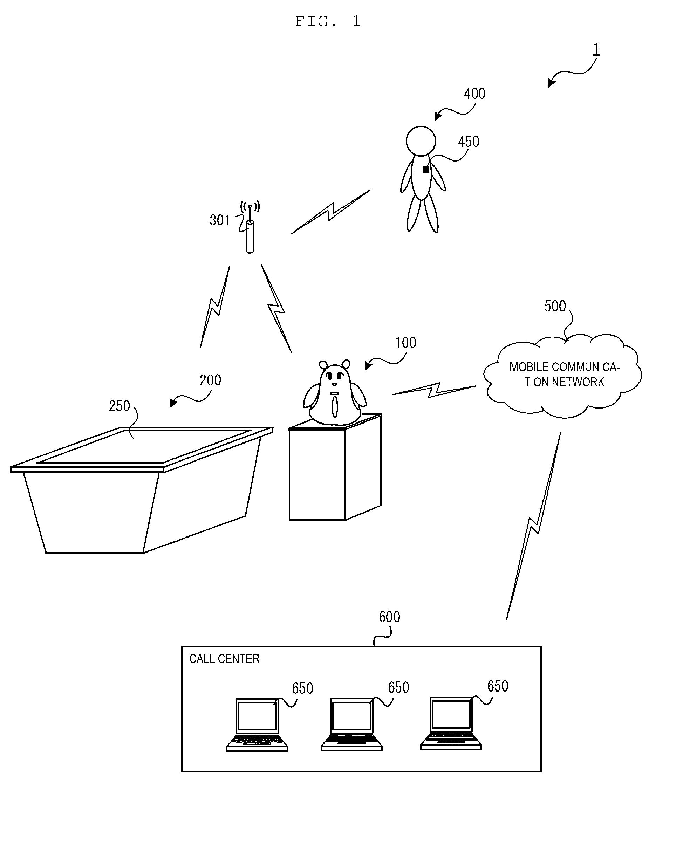

FIG. 1 is a schematic view showing a structural example of a detection system of an embodiment. The detection system 1 includes a detection apparatus 100, a desktop information processing apparatus 200 (first object) which is an exhibit as a commodity, an access point 301 constituting a data communication infrastructure, and a receiver 450 (specified apparatus) held by a staff 400 as a support member.

The detection apparatus 100 is positioned near the desktop information processing apparatus 200 as the exhibit, and is arranged so that at least an inner camera of the detection apparatus 100 can capture a store visitor using the desktop information processing apparatus 200. Besides, the detection apparatus 100 is arranged at a position where a voice uttered by the store visitor operating the desktop information processing apparatus 200 can be detected.

The detection apparatus 100 communicates with a mobile communication network 500 as a broadband communication network, and notifies a client apparatus 650 (specified apparatus) installed in an external call center 600. The client apparatus 650 is an apparatus (computer) used by a supporter for supporting the handling of the desktop information processing apparatus 200. However, the client apparatus may be such that a communication protocol suitable for calling, incoming call and speech communication is adopted, and the store visitor directly performs speech communication with the support member in the call center 600.

Besides, the detection apparatus 100 can transmit data to the receiver 450 through the access point 300.

The desktop information processing apparatus 200 includes a large touch panel display on a top plate surface, receives operations of the store visitor or the staff, and performs various information processings. In this embodiment, the description will be made on a case, as an example, where the desktop information processing apparatus 200 is exhibited and is sold.

The access point 301 constitutes the communication infrastructure for performing data communication based on the wireless communication standards of IEEE 802.11 series. The access point 301 forms a local area network, and relays data communication among the detection apparatus 100, the desktop information processing apparatus 200 and the receiver 450 held by the staff 400. The access point 301 has a function to automatically assign an IP address to each apparatus, and controls to uniquely identify each apparatus based on the IP address, to specify a transmission origin, and to transmit to a transmission destination.

When receiving information (hereinafter referred to as help information) transmitted from the detection apparatus 100, the receiver 450 notifies the staff 400 through an inner speaker.

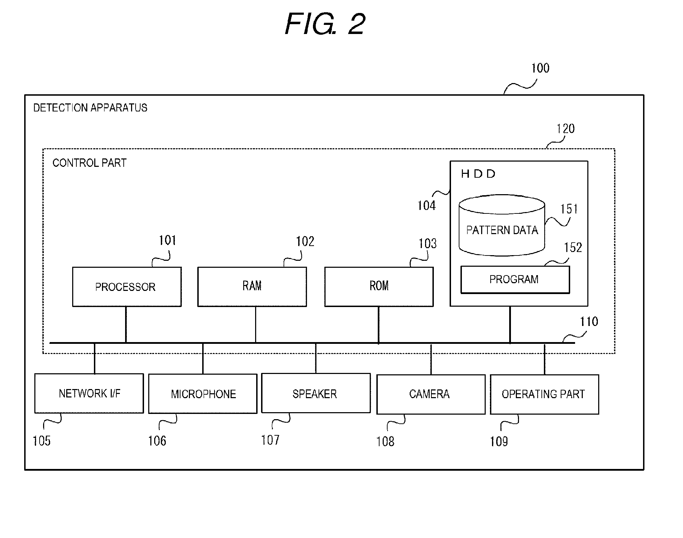

FIG. 2 is a block diagram showing a structural example of the detection apparatus 100. The detection apparatus 100 has a built-in computer, and includes a processor 101, a RAM (Random Access Memory) 102, a ROM (Read Only Memory) 103, a HDD (Hard Disk Drive) 104, a network I/F (Interface) 105, a microphone 106, a speaker 107, a camera 108, and an operating part 109. The respective units perform input and output of data and signals from and to each other through a bus 110. Incidentally, a configuration including the processor 101, the RAM 102, the ROM 103, the HDD 104 and the bus 110 for allowing the respective units to perform input and output is a control part 120.

The processor 101 is an arithmetic device such as a CPU (Central Processing Unit). The processor 101 expands a program stored in the ROM 103 or a program 152 stored in the HDD 104 into the RAM 102, and performs an arithmetic operation to provide various functions in cooperation with the respective hardware. The RAM 102 is a main storage device, and the ROM 103 is a device to non volatilely store a system program and the like.

The HDD 104 is an auxiliary storage device to non volatilely store the program 152, pattern data 151 and the like. The pattern data 151 is such that feature data (pattern) of actions performed and voices uttered when people are in trouble are previously stored. The network I/F 105 includes a mechanism in accordance with the wireless communication standards of IEEE 802.11 series, and controls data communication between the detection apparatus 100 and an external apparatus. Besides, the network I/F 105 includes a mechanism in accordance with the standard such as IMT-2000 or IMT-Advanced, and can transmit or receive voice data to or from the call center through the mobile communication network 500.

The microphone 106 collects sounds outside the detection apparatus 100. The microphone 106 also includes an amplifier and a noise canceller, and converts the collected sound signal from analog into digital form. The RAM 102 stores the digital collected sound data based on the control of the processor 101. In speech communication with the call center, the microphone 106 also functions as a microphone for speech communication. The speaker 107 is a unit including a power amplifier and a controller, and outputs a voice from the call center in the speech communication. The microphone 106 is arranged at the position of a mouth of the robot, and the speaker 107 is arranged at the position of an ear. However, the microphone and the speaker may be arranged at other parts.

The camera 108 includes a lens, an imaging element (CCD image sensor) and the like. The camera continuously captures (video imaging) the outside of the detection apparatus 100, and converts into image data. The RAM 102 stores the image data or video data based on the control of the processor 101. The lens of the camera 108 may be arranged at, for example, the position of an eye of the robot or may be arranged at another part. The camera 108 captures the store visitor using the desktop information processing apparatus 200 on trial.

The operating part 109 includes a part and a mechanism to change the outer appearance of the detection apparatus 100. The operating part 109 moves, for example, the hand, eye, ear and other parts of the robot, or turns on an LED light included in the configuration, and attracts the attention of the store visitor and guides the store visitor to the desktop information processing apparatus 200.

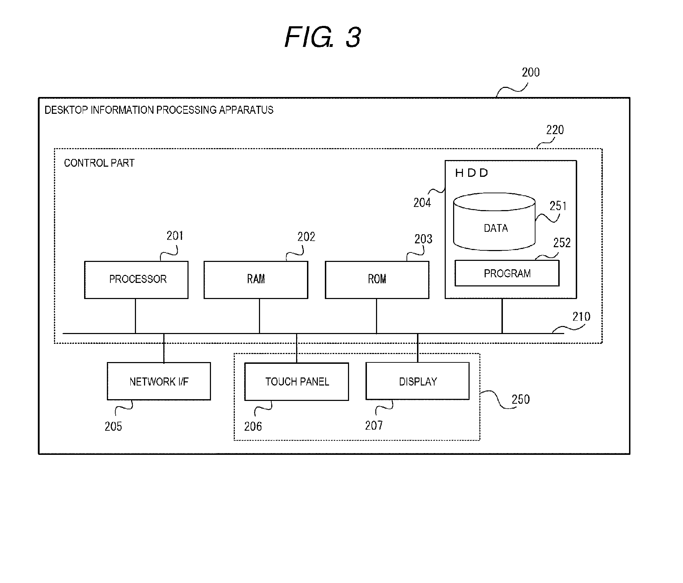

FIG. 3 is a block diagram showing a structural example of the desktop information processing apparatus 200. The desktop information processing apparatus 200 is a computer including the large touch panel display 250 on the top plate surface, and is similar to a related art computer except for this configuration. That is, as shown in FIG. 3, the desktop information processing apparatus 200 includes a processor 201, a RAM 202, a ROM 203, a HDD 204, a network I/F 205, a touch panel 206 and a display 207. The respective units perform input and output of data and signals with each other through a bus 210. Incidentally, a configuration including the processor 201, the RAM 202, the ROM 203, the HDD 204 and the bus 210 for allowing the respective units to perform input and output is a control part 220. The HDD 204 previously stores a control program, a program 252 as various applications, and data 251.

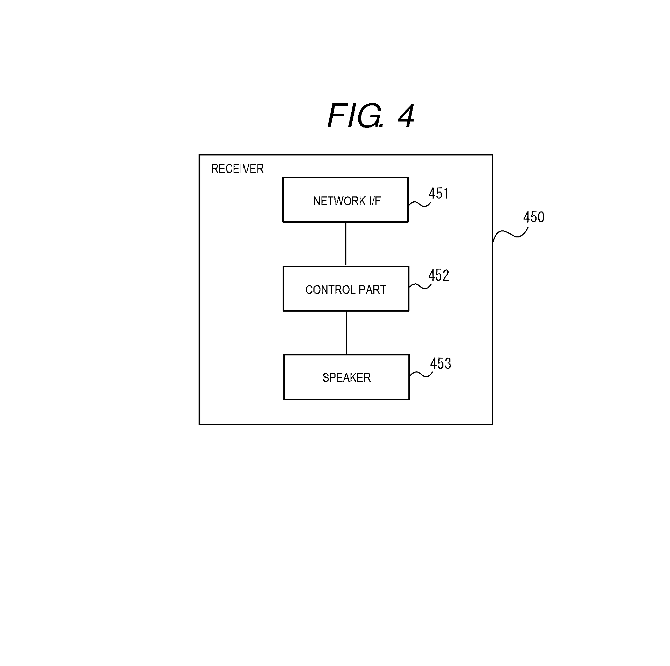

FIG. 4 is a block diagram showing a structural example of the receiver 450. The receiver 450 is a receiver (apparatus) used by the stuff to support the handling of the desktop information processing apparatus 200, and includes a network I/F 451, a control part 452 and a speaker 453. The network I/F 451 receives the help information transmitted from the detection apparatus 100. The speaker 453 outputs a specific notification sound. When the network I/F 451 receives the help information, the control part 452 controls to ring the speaker 453.

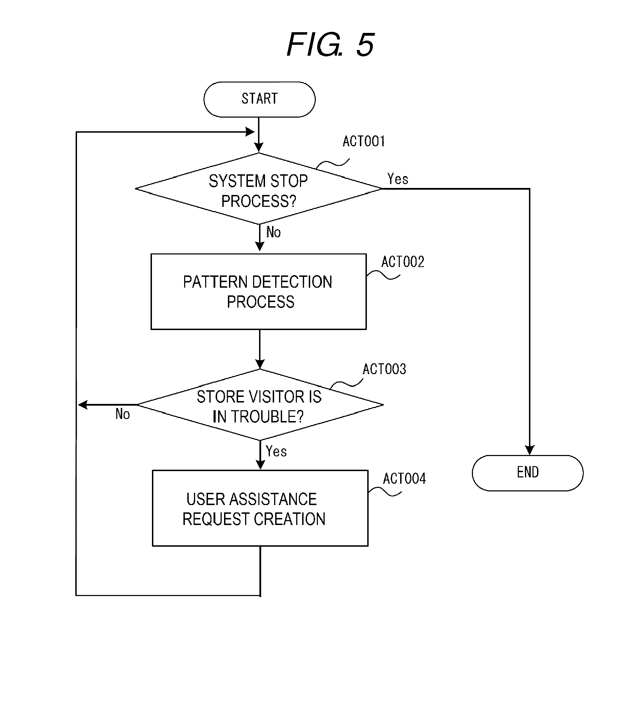

FIG. 5 is a flowchart showing an operation outline of the detection system 1 of the embodiment. If a stop process (for example, power OFF process of the detection apparatus 100) of the detection system is not performed (ACT001, No), the detection apparatus 100 performs a pattern detection process (ACT002). ACT002 is a process for determining, based on the action of the store visitor, whether or not the action is an action performed when people are in trouble. That is, action patterns (feature patterns of images, voice patterns) performed when store visitors are in trouble are previously registered as the pattern data 151 in the HDD 104, and the detection apparatus 100 determines whether the action of the store visitor is coincident with the patterns or the store visitor performs a close action within a threshold range. The details of ACT002 will be described later.

If the action pattern of the store visitor is not coincident with or is not close to the previously defined patterns, that is, if a determination that the store visitor is in trouble is not made (ACT003, No), the process returns to ACT001. On the other hand, if the action pattern of the store visitor is coincident with or is close to the previously defined patterns, that is, if a determination that the store visitor is in trouble is made (ACT003, Yes), the detection apparatus 100 creates a request for assisting the store visitor (ACT004). This operation will also be described later.

The above operation is repeatedly performed until the system stop process is performed (loop from ACT004 to ACT001), and if the system stop process is performed (ACT001, Yes), the operation is ended.

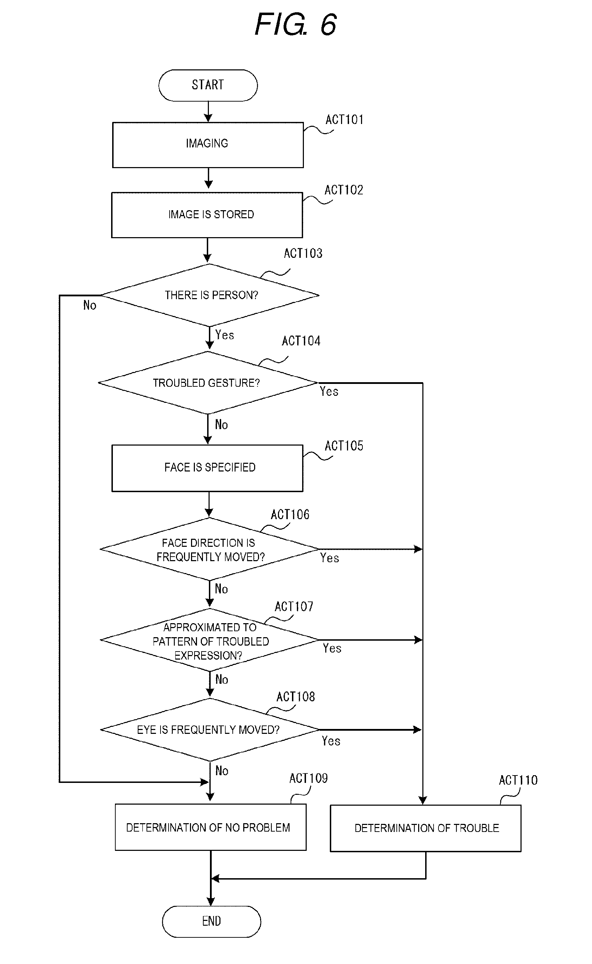

The details of the pattern detection process at ACT002 will be described with reference to FIG. 6 to FIG. 8. The following flowchart is realized in such a way that the processor 101 of the detection apparatus 100 expands the program 152 previously stored in the HDD 104 into the RAM 102, and performs an arithmetic operation. Besides, the following flowchart is realized by cooperation of the program 152 and the hardware in the detection apparatus 100. Incidentally, the processor 101 performs the operations of the respective flowcharts shown in FIG. 6 to FIG. 8 in parallel. Besides, the operations of FIG. 6 to FIG. 8 are repeatedly performed by the loop process from ACT004 to ACT001 of FIG. 5.

First, the operation of determining, based on a video obtained by the camera 108, whether or not the store visitor is in trouble will be described with reference to FIG. 6. The processor 101 controls the camera 108 to continuously perform video capturing (imaging) of the outside (ACT101), and causes the RAM 102 to store the captured video data (ACT102). The processor 101 determines whether or not a person exists in the captured image (ACT103). The method of detecting the presence or absence of a person is performed based on a related art technique. If there is no person (ACT103, No), the processor 101 causes, for example, the RAM 102 to store data indicating that there is no problem (ACT109).

On the other hand, if there is a person in the captured image (ACT 103, Yes), the processor 101 derives the shape of the person from the image data based on a related art technique, and determines whether or not the shape is the shape of a gesture performed when people are in trouble (ACT104). The gesture is, for example, a gesture of raising the hand while the palm faces upward, or a gesture of putting the hand on the chin. The pattern data of these gestures are previously stored in the pattern data 151, and the processor 101 determines, based on the pattern data 151, whether or not the store visitor performs the gesture which is performed when people are in trouble. If the determination at ACT104 is affirmative, the processor 101 causes the RAM 12 to store data indicating the determination result that the visitor is in trouble (ACT110).

On the other hand, if the determination at ACT104 is negative, the processor 101 specifies the face of the person (ACT105), and determines whether the face direction moves frequently (ACT106). Here, the processor 101 determines whether such a gesture as to move the face right and left to look out over the neighborhood and as to search for a staff is performed. The processor 101 obtains differences between the respective frames (still images) of the video data, and determines, based on the differences, whether the face moves. If ACT106 is affirmative, the processor 101 causes the RAM 102 to store the determination result that the store visitor is in trouble (ACT110).

On the other hand, if ACT106 is negative, the processor 101 next detects the feature pattern of the face in the image, and determines whether a troubled expression appears on the face of the person (ACT107). Here, feature points are previously extracted from image data of, for example, an expression of furrowed brows, and the feature pattern is previously stored as the pattern data 151 in the HDD 104. The processor 101 compares the feature pattern of the captured face with the pattern data 151. By this, the processor 101 determines, based on a related art technique, whether the feature pattern is coincident with or close to the pattern of the troubled expression. If ACT106 is affirmative, the processor 101 causes the RAM 102 to store the determination result that the store visitor is in trouble (ACT110).

If ACT107 is negative, the processor 101 specifies a position of an eye and determines whether the eye frequently moves (ACT108). The processor 101 obtains differences between the respective frames (still images) of the video data, and determines, based on the differences, whether the eye moves. If ACT108 is affirmative, the processor 101 causes the RAM 102 to store the determination result that the store visitor is in trouble (ACT110).

If ACT108 is negative, since all the determinations are passed, the processor 101 causes the RAM 102 to store data indicating the determination result that there is no problem (ACT109).

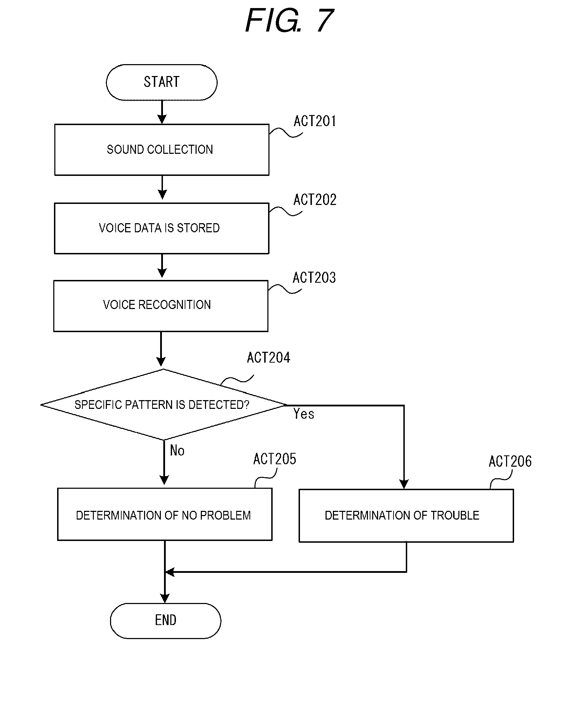

Next, an operation example in which a determination as to whether or not a store visitor is in trouble is made based on a voice uttered by the store visitor will be described with reference to FIG. 7. For example, if the store visitor utters that he or she is in trouble in a soliloquy or conversation with another person, the processor 101 detects the voice and determines whether or not the store visitor is in trouble. The processor 101 performs voice recognition of the voice collected by the microphone 106, and determines that the store visitor is in trouble if the recognized pattern is coincident with the pattern data 151 previously stored in the HDD 104.

The processor 101 activates the microphone 106 to collect an outside voice and performs digital conversion (ACT201). The processor causes, for example, the RAM 102 to store the voice data (ACT202). The processor 101 performs voice recognition based on an existing technique, and determines whether or not a specific voice pattern is uttered (ACT203). For example, data of voices uttered when a trouble occurs, such as "What can I do?", "What should I do?" or "What shall I do?", and the patterns are previously registered as the pattern data 151 in the HDD 104. The processor 101 determines at ACT203 whether the voice pattern after the voice recognition is coincident with or is close to the previously registered voice pattern.

If the patterns are coincident with or close to each other, that is, if the feature pattern is detected (ACT204, Yes), the processor 101 causes the RAM 102 to store data indicating the determination result that the store visitor is in trouble (ACT206). On the other hand, if the feature pattern is not detected (CT204, No), the processor 101 causes the RAM 102 to store data indicating the determination result that there is no problem (ACT205).

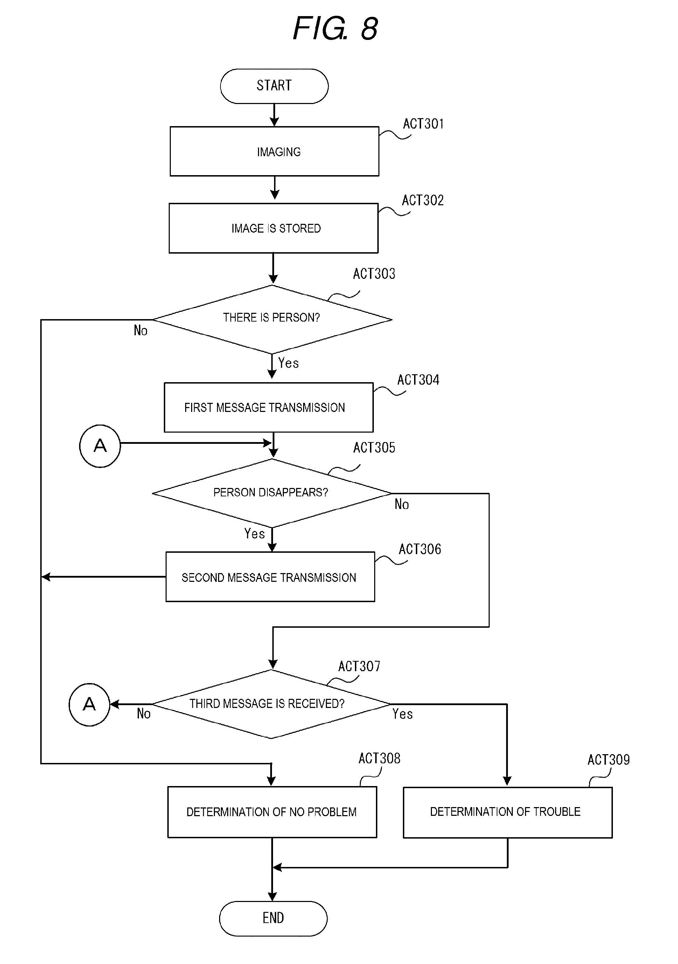

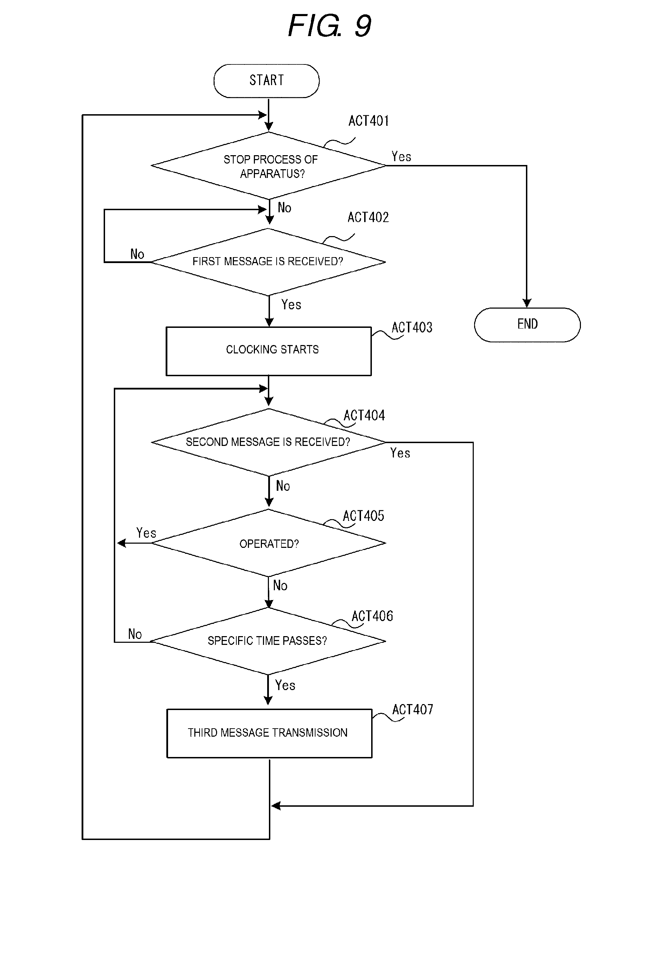

Besides, if the store visitor does not operate the desktop information processing apparatus 200 as the exhibited commodity although he or she is located near the desktop information processing apparatus 200, the detection system 1 of the example determines that the store visitor is in trouble. An example of a determination operation at this time will be described with reference to an operation example of the detection apparatus 100 of FIG. 8 and an operation example of the desktop information processing apparatus 200 of FIG. 9. In the example, the detection apparatus 100 and the desktop information processing apparatus 200 exchange messages and operate in cooperation with each other.

Since the operations from ACT301 to ACT303 shown in FIG. 8 are the same as those of FIG. 6, the description is omitted. Besides, the operations of determining the presence or absence of a person at ACT301 to ACT302 and ACT303 are assumed to be always performed.

If a determination is made at ACT303 that there is no person (ACT303, No), the processor 101 causes the RAM 102 to store data indicating the determination result that there is no problem (ACT308).

If a determination is made at ACT303 that there is a person (ACT303, Yes), the processor 101 controls the network I/F 105 and transmits a first message indicating that there is a person to the desktop information processing apparatus 200 (ACT304). If the person disappears (ACT305, Yes), the processor 101 controls the network I/F 105 and transmits a second message indicating that the person disappears to the desktop information processing apparatus 200 (ACT306), and causes the RAM 102 to store the determination result that there is no problem (ACT308).

If the person is still in existence (ACT305, No), the processor 101 determines whether a third message is received from the desktop information processing apparatus 200 (ACT307). The third message is a message which is sent when the touch panel 206 of the desktop information processing apparatus 200 is not operated for a specific time. If the network I/F 105 receives the third message (ACT307, Yes), the processor 101 causes the RAM 102 to store the determination result that the store visitor is in trouble (ACT309). On the other hand, if the network I/F 105 does not receive the third message (ACT307, No), return is made to ACT305. That is, the processor 101 repeatedly performs ACT305 to ACT307 until the person disappears and the second message is received or the third message is received.

An operation of the desktop information processing apparatus 200 will be described with reference to FIG. 9. The flowchart of FIG. 9 is repeatedly performed until a stop process of the desktop information processing apparatus 200 is performed (determination process at ACT 401).

If the stop process is not performed (ACT 401, No), the processor 201 waits until the network I/F 205 receives the first message (ACT 402, loop of No). If the network I/F 205 receives the first message (message indicating that there is a person) from the detection apparatus 100 (ACT 402, Yes), clocking starts by the internal timer of the processor 201 (ACT 403). Next, if the second message (message indicating that the person disappears) is received from the detection apparatus 100 (ACT 404, Yes), the processor 201 resets the timer and returns the process to ACT 401. If the second message is not received (ACT 404, No), the processor 201 determines whether there is an operation signal (for example, a signal of a user's fingertip touch or flick operation) from the touch panel 206 (ACT 405). If the operation signal exists (ACT 405, Yes), return is made to ACT 404. If the operation signal does not exist (ACT 405, No), the processor 201 determines whether a specific time passes from the timer clocking start (ACT 406). If the specific time does not pass (ACT 406, No), return is made to ACT 404. If the specific time passes (ACT 406, Yes), the processor 201 activates the network I/F 205, transmits the third message indicating that the operation is not performed for the specific time to the detection apparatus 100 (ACT 407), and returns the process to ACT 401.

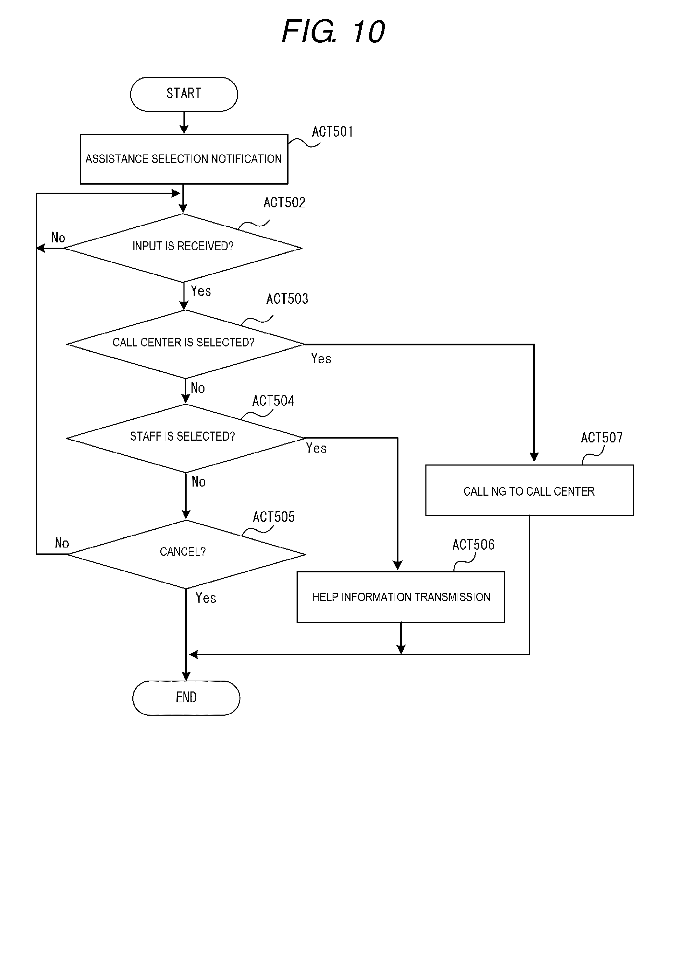

Subsequently, a creation process of a user assistance request performed at ACT 004 of FIG. 5 will be described with reference to FIG. 10. If the determination that the store visitor is in trouble is made at ACT003 of FIG. 5 (ACT 003, Yes), the processor 101 performs an assistance selection notification (ACT 501) shown in FIG. 10. In the example, the processor 101 controls the speaker 107 and outputs a voice indicating to assist, for example, "May I help you?". Besides, the processor 101 controls the speaker 107 and outputs a menu voice to cause the store visitor to select a call center or a staff, or to select "cancel".

The processor 101 determines whether a voice is received through the microphone 106 (ACT 502). If the voice is received (ACT 502, Yes), the processor 101 identifies the voice and determines whether the call center is selected (ACT 503). If the call center is selected (ACT 503, yes), the processor 101 controls the network I/F 105 and calls (notifies) the client apparatus 650 of the call center 600 through the mobile communication network 500 (ACT 507). Incidentally, in this example, identification information of the transmission destination is previously stored in the HDD 104, and the processor 101 acquires the identification information and specifies the transmission destination. Hereinafter, the store visitor and the supporter of the call center perform a voice call.

If the call center is not selected (ACT 503, No), the processor 101 next determines whether the staff is selected (ACT 504). If the staff is selected (ACT 504, Yes), the processor controls the network I/F 105 and transmits the specific help information to the receiver 450 through the access point 301 (ACT 506). The identification information of the transmission destination at this time is also previously stored in the HDD 14. The processor 101 acquires the identification information and specifies the transmission destination.

If the staff is not selected (ACT 504, No), the processor 101 determines whether "cancel" is selected (ACT 505). If the "cancel" is selected (ACT 505, Yes), the process is ended. If the "cancel" is not selected (ACT 505, No), return is made to ACT 502, and the input reception operation is again performed.

Incidentally, if the operation of FIG. 10 is continued even when a specific time passes, an interruption occurs and the process is ended.

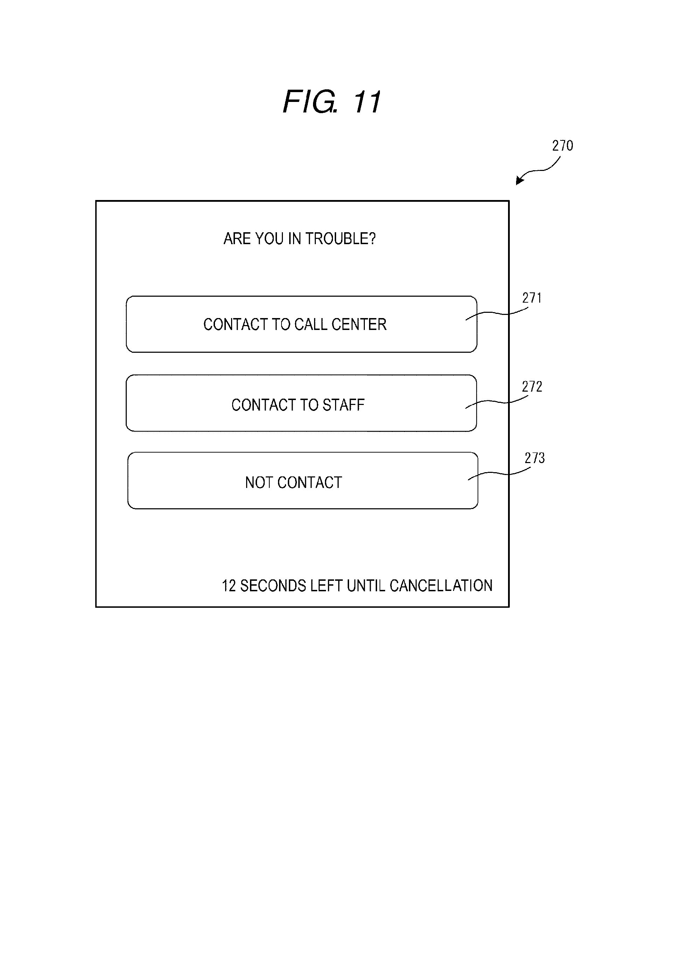

In the operation example shown in FIG. 10, the request is created based on the voice of the store visitor. However, the request may be created through a display part such as a monitor or an operation part such as a keyboard or a mouse. The touch panel display 250 of the desktop information processing apparatus 200 may be used as the display part or the operation part. FIG. 11 shows a display screen example at this time. The detection apparatus 100 transmits display instruction information to the desktop information processing apparatus 200, and the desktop information processing apparatus 200 displays a screen 270 shown in FIG. 11. When the store visitor selects one of buttons 271 to 273, the network I/F 205 of the desktop information processing apparatus 200 transmits identification information corresponding to the buttons 271 to 273 to the detection apparatus 100. The detection apparatus 100 performs an action corresponding to the received identification information (see FIG. 10). Besides, as shown in FIG. 11, a countdown value until timeout may be displayed.

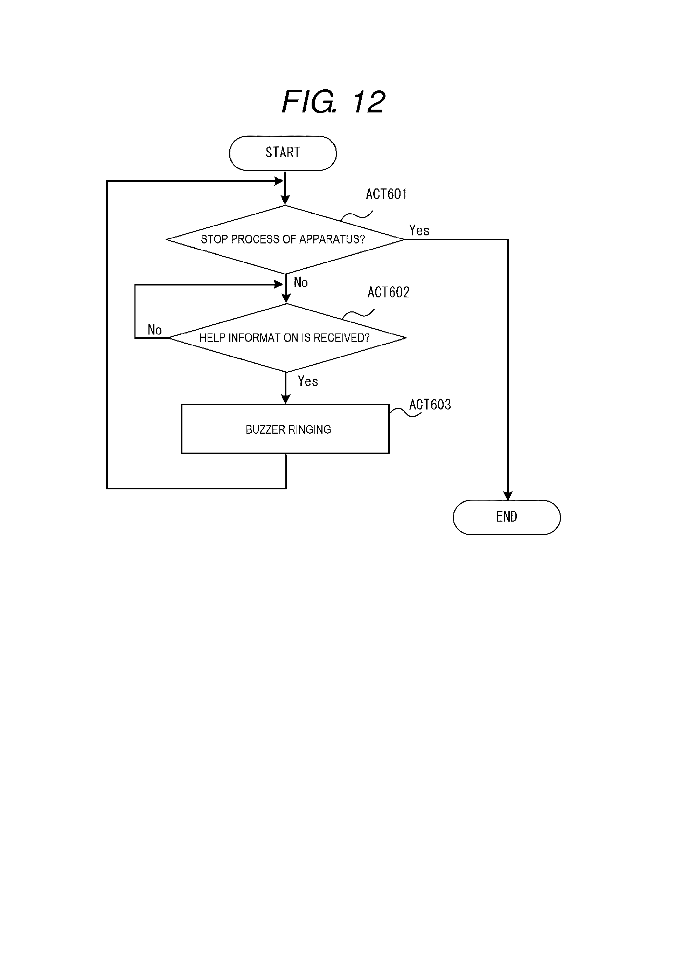

Finally, an operation example of the receiver 450 is shown in the flowchart of FIG. 12. The receiver 450 repeatedly performs the operation of FIG. 12 until a stop process of the receiver 450 itself is received (ACT 601, Yes). If the stop process is not received (ACT 601, No), the control part 452 waits until help information is received (ACT 602). If the help information is received (ACT 602, Yes), the control part 452 activates the speaker 453, rings a buzzer sound (ACT 603), and returns the process to ACT 601.

In the embodiment, the robot-type detection apparatus is arranged in order to sell the desktop information processing apparatus. However, the detection apparatus of the embodiment may be placed near any instrument to monitor the action of the user. For example, the detection apparatus of the embodiment may be placed near a cash dispenser. Besides, in the embodiment, the detection apparatus is placed near the so-called precision instrument such as the apparatus or the instrument. However, the detection apparatus may be placed near an object, such as a tool or an implement, to monitor the action of the user. The object conceptually includes the tool, the implement, the instrument and the apparatus.

In the embodiments, although the description is made on the case where the function to carry out the respective examples is previously recorded in the inside of the apparatus, no limitation is made to this. The same function may be downloaded from the network to the apparatus, or a storage medium storing the same function may be installed in the apparatus. As the recording medium, any recording medium, such as a CD-ROM, may be used as long as the program can be stored and the apparatus can read. The function previously obtained by the installation or download may be such that the function is realized in cooperation with an OS (Operating System) of the apparatus.

According to the embodiments, the user can be dealt with even if an assistant is not nearby, and the cost of personnel assignment can be reduced.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made without departing from the spirit of the inventions. The accompanying claims and their equivalents are intended to cover such forms or modifications as would fall within the scope and spirit of the inventions.

## Claims

1. A detection apparatus comprising:
an imaging part to capture a person using a first object;
a control part to determine, whether the person is in trouble based on an image captured by the imaging part and pattern data previously stored in a storage part, and
an interface part to notify a specified apparatus if the control part determines that the person is in trouble.

2. The apparatus according to claim 1, wherein the control part specifies a face of the person from the image captured by the imaging part, compares feature data of the face with feature data of faces previously stored in the storage part, and determines whether the person is in trouble.

3. The apparatus according to claim 2, wherein the control part compares the feature data of the face of the person captured by the imaging part with feature data of a face with furrowed brows previously stored in the storage part.

4. The apparatus according to claim 1, wherein the control part determines whether the person performs an action of raising a hand while a palm faces upward, and determines whether the person is in trouble.

5. The apparatus according to claim 1, wherein
the imaging part takes a video, and
the control part specifies a face of the person from the image captured by the imaging part, and determines whether the face moves in right and left by comparing respective frame images in the video.

6. The apparatus according to any one of claims 1 to 5, further comprising a microphone to collect a voice uttered by the person, wherein
the control part performs voice recognition of the voice collected by the microphone, and determines that the person is in trouble if a recognized pattern is coincident with a pattern previously stored in the storage part.

7. The apparatus according to any one of claims 1 to 6, wherein the interface part notifies an apparatus in a facility outside a facility where the detection apparatus is installed through a broadband communication network.

8. The apparatus according to any one of claims 1 to 6, wherein the interface part notifies a receiver held by a person in a facility where the detection apparatus is installed.

9. The apparatus according to any one of claims 1 to 6, wherein
the control part determines, based on a selection made by the person, whether a notification is made to an apparatus in a facility outside a facility where the detection apparatus is installed or a notification is made to a receiver held by a person in the facility where the detection apparatus is installed, and
the interface part notifies in accordance with the determination.

10. A storage medium storing a program, wherein the program causes an apparatus including at least an imaging part and a network part to perform:
capturing a person using a first object;
determining, whether the person is in trouble based on an image captured by the imaging part and pattern data previously stored in a storage part, and
notifying a specified apparatus the determination if the person is in trouble.
